# EUROPÄISCHE PATENTSCHRIFT

(11) **EP 1 015 783 B1**
(45) Veröffentlichungstag und Bekanntmachung des Hinweises auf die Patenterteilung: **14.05.2003**
(21) Anmeldenummer: 98948973.7
(22) Anmeldetag: 16.09.1998
(51) Int. Cl.: F16D 11/14

(54) **KUPPELVERZAHNUNG, INSBESONDERE IN EINEM SCHALTGETRIEBE**
CLUTCH GEARING ESPECIALLY FOR A MANUAL TRANSMISSION
DENTURE D'EMBRAYAGE, NOTAMMENT POUR BOITE DE VITESSES

(30) Priorität: 20.09.1997 DE 19741613
(43) Veröffentlichungstag der Anmeldung: 05.07.2000
(73) Patentinhaber: BLW PRÄZISIONSSCHMIEDE GmbH, 80807 München (DE)
(72) Erfinder: TAUSCHEK, Georg, D-81885 München (DE); GUTMANN, Peter, D-81927 München (DE); WEISSMANN, Gerd, D-85464 Finsing (DE)
(74) Vertreter: Grättinger & Partner (GbR)
(86) Internationale Anmeldenummer: EP9805855
(87) Internationale Veröffentlichungsnummer: WO99015804

(56) Entgegenhaltungen:
- DE-A- 19 531 155
- DE-U- 8 438 446
- PATENT ABSTRACTS OF JAPAN vol. 016, no. 122 (M-1226), 27. März 1992 & JP 03 288052 A (OOOKA GIKEN KK), 18. Dezember 1991

## Beschreibung

Die Erfindung betrifft eine Kuppelverzahnung, insbesondere in einem Schaltgetriebe, entweder an einer Schaltmuffe oder einem Gangrad, deren Zähne fußseitig an einer bezüglich der Rotationsachse zylindrischen Grundfläche angesetzt, in Axialrichtung langgestreckt und an ihrem Kuppelende mit einer vom Zahnfuß zum Zahnkopf hin abfallenden Dachkontur versehen sind, die eine gerundete Dachkante aufweist.

Es sind Schaltmuffen bekannt (DE-U-8 438 446, DE 19604386 A1, DE 19531155 A1), deren Zähne dachförmig geformte Flächen aufweisen, die zusammen eine gerundete Kante bilden. Bekannt sind ferner symmetrische und asymmetrische Dachformen und solche mit abfallender Dachkontur; letztere dient der zusätzlichen Erleichterung beim Einspuren der beiden Verzahnungspartner einer Kuppelverzahnung. Der Fachmann strebt dabei an, daß während des initialen Kontakts der beiden Verzahnungen deren Berührung auf möglichst wenige Punkte bzw. Linien reduziert ist; dadurch läßt sich ein reibungsarmes und somit leichtgängiges Ineinandergreifen der beiden Verzahnungspartner einer Kuppelverzahnung bewerkstelligen. Zuwenig wird dabei noch auf den weiteren Verlauf des Einspurvorgangs geachtet, also nachdem es bereits zum initialen Kontakt gekommen ist. Hier setzt die vorliegende Erfindung an, indem sie das Ziel verfolgt, einen möglichst leichtgängigen Übergang in der Phase zwischen dem initialen Kontakt und der vollendeten Kuppelposition zu verwirklichen.

Dieses Ziel wird erfindungsgemäß dadurch erreicht, daß der Radius der Dachkantenrundung vom Zahnfuß zum Zahnkopf hin nach einer vorgegebenen Funktion zunimmt.

Diese Maßnahme hat eine kontinuierliche Vermehrung der Kontaktpunkte bzw. Verlängerung der Kontaktlinien, bis schließlich der erwünschte Flächenkontakt zwischen den kraftübertragenden Zahnflanken erreicht ist, zur Folge. Während des initialen Kontakts, d.h. in der Nähe des Fußbereichs mit entsprechend größerer Zahnhöhe bietet die Verzahnung dem gegenseitigen Eingriff ein besonders großes Spiel, weil dort der Radius der Dachkantenrundung relativ klein ist. Mit zunehmendem Eingriff, d.h. zunehmender axialer Verschiebung der beiden ineinandertretenden Verzahnungen kommt es entsprechend der Verbreiterung der Dachkante im Zahnkopfbereich wegen der dort relativ größeren Radien der Dachkantenrundung zu einer zunehmenden Zentrierung der beiden Verzahnungen zueinander, bis mit Erreichen des vollständigen Eingriffs deren maximaler Kontakt verwirklicht ist.

Für den, der das Schaltgetriebe betätigt, entsteht dabei der Eindruck eines weichen Schaltvorgangs, so als ob nach dem initialen Kontakt der geschaltete Gang sich quasi selbsttätig einlegte. Dieser Eindruck wird noch verstärkt, wenn die Radiuszunahme statt nach einer linearen Funktion progressiv, z.B. nach einer Exponentialfunktion oder einer Kreisfunktion verläuft.

Eine besonders vorteilhafte Progression vom Fußzylinder zum Kopfzylinder der Verzahnung definiert eine Radiuszunahme insgesamt um das 6fache, wobei die Verdopplung erst bei ca. 60 % der relativen Zahnhöhe erreicht ist.

Was die Konfiguration einer derartigen Kurzverzahnung insgesamt betrifft, so könnte man in bildhafter Umsetzung der erfindungsgemäßen Regeln die Dachform im Falle eines symmetrischen Zahnes vergleichen mit einer menschlichen Nase, welche an der Nasenwurzel, die vergleichsweise dem Fußzylinder der Verzahnung entspricht, besonders schmal ausgebildet ist und sich dann bis zur Nasenspitze hin zunehmend verbreitert. Der Nasenrücken kann dabei entweder geradlinig oder nach unten gebogen abfallen, wobei der tiefste Punkt der Nase vergleichsweise dem Kopfzylinder der Verzahnung entspricht. Um bei dem aufgezeigten Bild zu bleiben, würde die Körperlängsachse des Nasenträgers der Rotationsachse der Verzahnung entsprechen.

Was die seitlich an die Dachkante angrenzenden schrägen Dachflächen betrifft, so sind diese bevorzugt als ebene Flächen ausgebildet. Dies erleichtert deren Formgebung in einem Umformverfahren, z.B. für die Herstellung als Schmiedeteil, wobei auf einem Schmiedeschritt ein oder mehrere Kalibrierschritte folgen können.

Allerdings sind im Rahmen der Erfindung auch gewölbte Dachflächen denkbar, deren präzise Herstellung bei Minimalverformungen wie bei einer Kuppelverzahnung jedoch auf Schwierigkeiten stößt. Ähnliches gilt für asymmetrische Dachformen, deren Herstellung ebenfalls eine hohe Präzision der Formgebungswerkzeuge bzw. des Umformverfahrens voraussetzt.

Im folgenden wird die Erfindung anhand einiger Ausführungsbeispiele erläutert. Es zeigen
- Fig. 1 bis 4: einen Zahn einer Kuppelverzahnung mit proportionaler Radiuszunahme in vier verschiedenen Ansichten,
- Fig. 5: eine graphische Erläuterung zur proportionalen Radiuszunahme,
- Fig. 6: Verläufe der Radiuszunahme in graphischer Darstellung,
- Fig. 7: eine graphische Erläuterung zur progressiven Radiuszunahme,
- Fig. 8 bis 11: einen Zahn mit symmetrischer Dachform und progressiver Radiuszunahme in vier verschiedenen Ansichten,
- Fig. 12 bis 15: einen Zahn mit asymmetrischer Dachform und progressiver Radiuszunahme in vier verschiedenen Ansichten,
- Fig. 16: einen Zahn mit symmetrischer Dachform in perspektivischer Darstellung und
- Fig. 17: einen Zahn mit asymmetrischer Dachform in perspektivischer Darstellung.

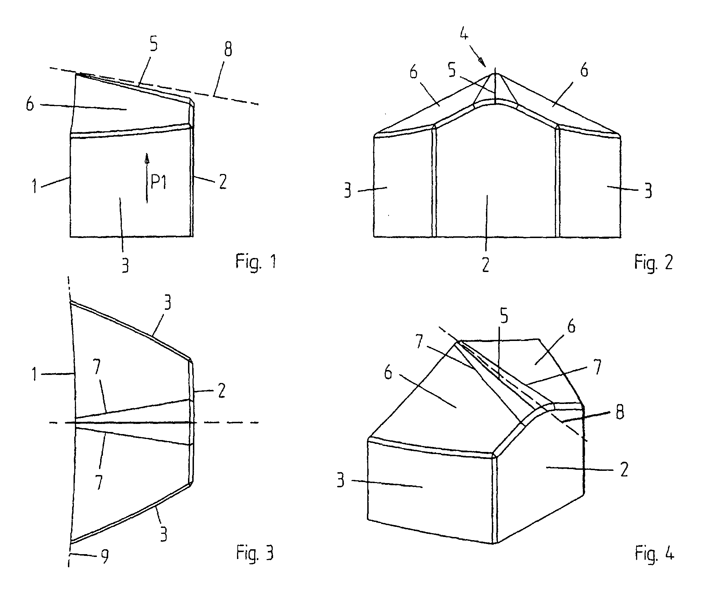

Der in den Fig. 1 bis 4 dargestellte Zahn einer Kuppelverzahnung, z.B. in einer Schiebemuffe ist, wie man aus der Draufsicht (Fig. 3) erkennt, im Querschnitt etwa trapezförmig ausgebildet, d.h. er besitzt vom Zahnfuß 1 zum Zahnkopf 2 hin schräg zusammenlaufende Seitenflanken 3. Die Dachkontur seiner symmetrischen Dachform 4 ist gekennzeichnet durch eine vom Zahnfuß 1 zum Zahnkopf 2 abfallende Dachkante 5, welche wie in der Seitenansicht gemäß Fig. 2 sowie in der perspektivischen Darstellung gemäß Fig. 4 verdeutlicht ist, gerundet ausgebildet ist. An die gerundete Dachkante 5 schließen sich zu beiden Seiten ebene Dachflächen 6 an. Entsprechend dem zum Zahnkopf 2 hin divergierenden Verlauf der seitlichen Verschneidungslinien 7 der Dachkantenrundung mit den anschließenden Dachflächen 6 erkennt man ohne weiteres, daß der Radius der Dachkantenrundung vom Zahnfuß 1 zum Zahnkopf 2 hin zunimmt. Daraus ergibt sich bei ebenen Dachflächen 6 eine Abweichung der Dachkante 5 von der in Fig. 1 dargestellten theoretischen Schnittkante 8 der beiden Dachflächen 6. Pfeil P1 bezeichnet die Schieberichtung des Zahns beim Kuppeln mit der Gegenverzahnung.

In der Draufsicht gemäß Fig. 3 ist der Zahnfuß 1 leicht gewölbt dargestellt. Mit diesem Verlauf soll die mit einer strichpunktierten Verlängerungslinie 9 fortgesetzte Grundfläche der Kuppelverzahnung dargestellt werden, bei welcher es sich um eine Zylinderfläche mit einer Längsachse parallel zur Schieberichtung gemäß Pfeil P1 handelt.

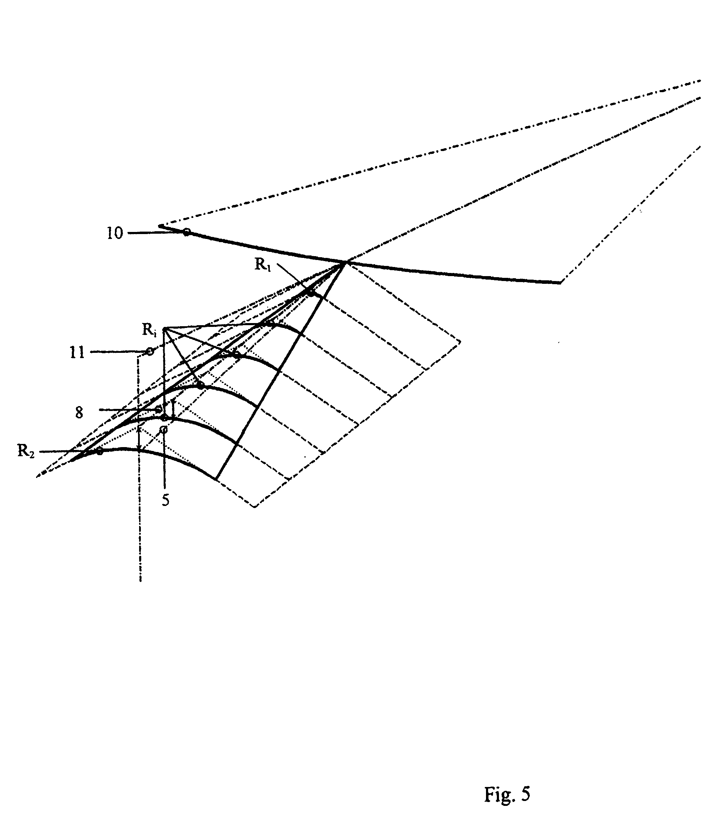

Fig. 5 ist eine zeichnerische Erläuterung zur Dachkantenrundung eines Zahnes einer Kuppelverzahnung gemäß den Fig. 1 bis 4. An die mit einer ersten Konstruktionslinie 10 angedeutete Grundfläche schließt sich die Dachkante 5 abfallend an. Es sind zwischen einem Radius R1 im Bereich des Zahnfußes und einem Radius R2 im Bereich des Zahnkopfes vier weitere Radien Rᵢ eingezeichnet, welche in ihrem Verhältnis zueinander eine lineare Zunahme des Dachkantenradius vom Zahnfuß zum Zahnkopf hin erkennen lassen.

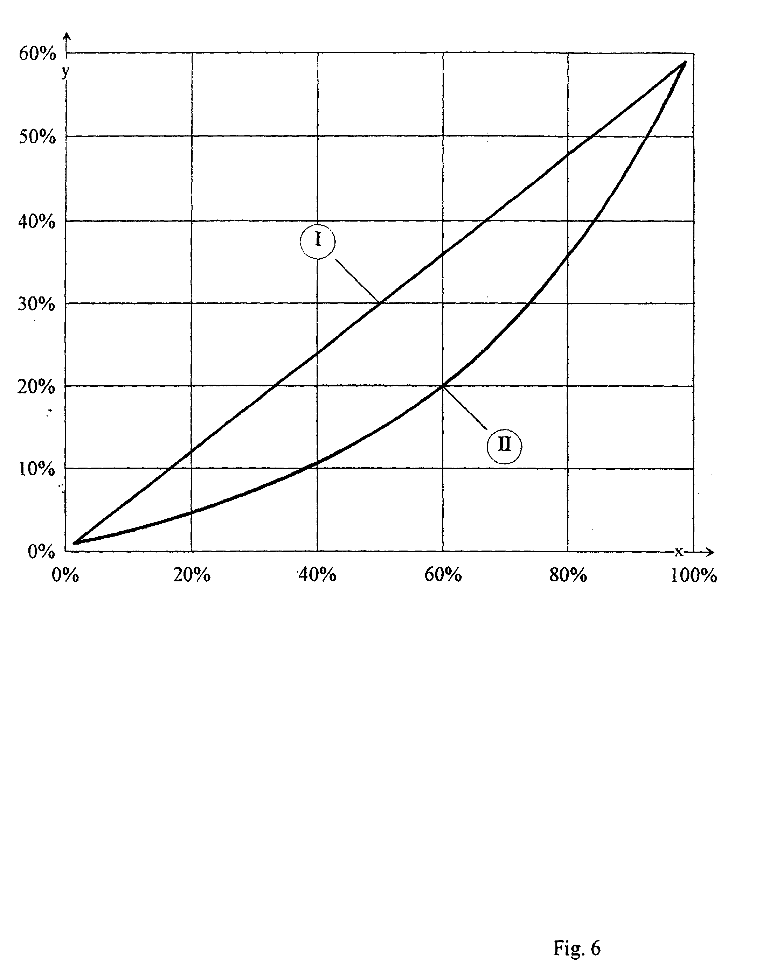

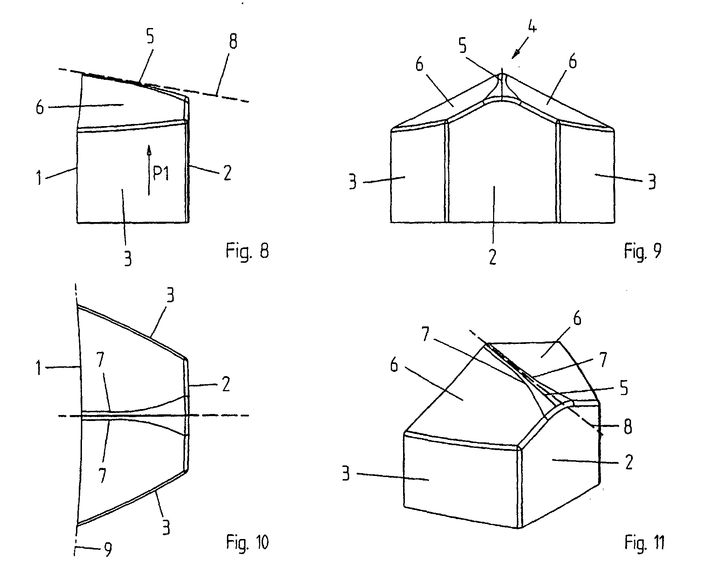

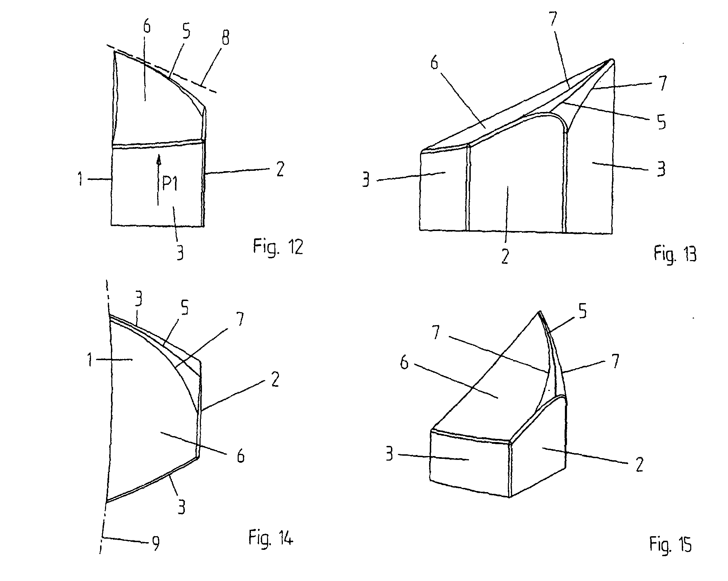

Gemäß Fig. 6 ist beispielhaft die Radiuszunahme (y-Achse) im Dachkantenbereich gegenüber der relativen Zahnhöhe (x-Achse) graphisch dargestellt, wobei die Zahnhöhe in Richtung einer zweiten Konstruktionslinie 11 (Fig. 5) zunehmend vom Zahnfuß zum Zahnkopf gemessen wird. In Fig. 6 sind zwei Varianten eingezeichnet, nämlich eine Gerade I, welche einen linearen Verlauf für die Radiuszunahme vorschlägt, wie sie beispielsweise in einer Dachform gemäß den Fig. 1 bis 4 verwirklicht ist; ferner eine Kurve II für einen progressiven Verlauf der Radiuszunahme, wie er beispielsweise bei einer symmetrischen Dachform gemäß den Fig. 8 bis 11 oder bei einer asymmetrischen Dachform gemäß den Fig. 12 bis 15 verwirklicht ist. Für beide Dachformen wurden zu den Fig. 1 bis 4 korrespondierende Bezugszeichen verwendet, so daß es sich erübrigt, die einzelnen Elemente dieser Zahnformen nochmals im Detail zu erläutern.

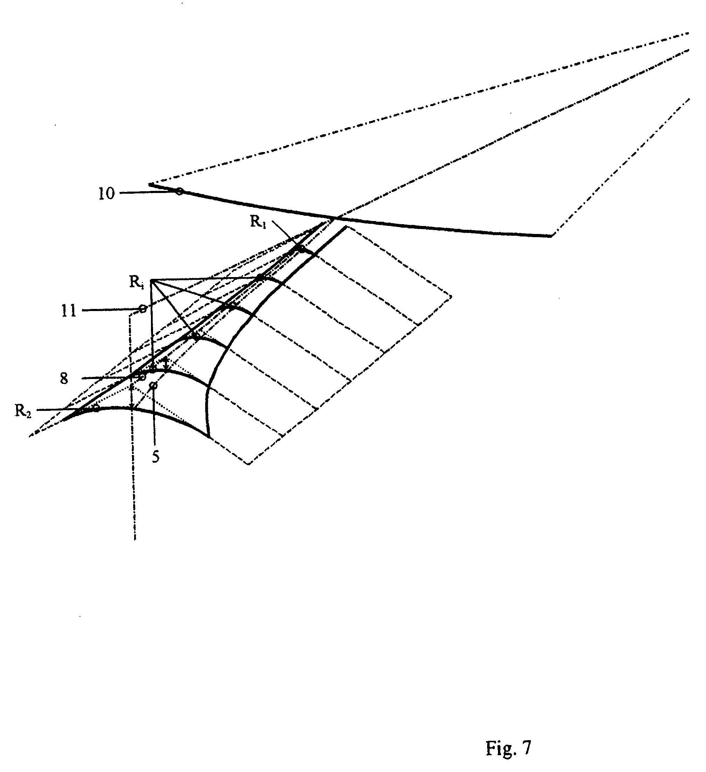

Bei der Zahnform mit progressiver Radiuszunahme gemäß den Fig. 8 bis 11 verläuft die Dachkante 5 gegenüber der theoretischen Schnittkante 8 der ebenen Dachflächen 6 nach einer progressiv abfallenden Kurve, welche der Kontur der Dachkante 5 gemäß Fig. 7 entspricht.

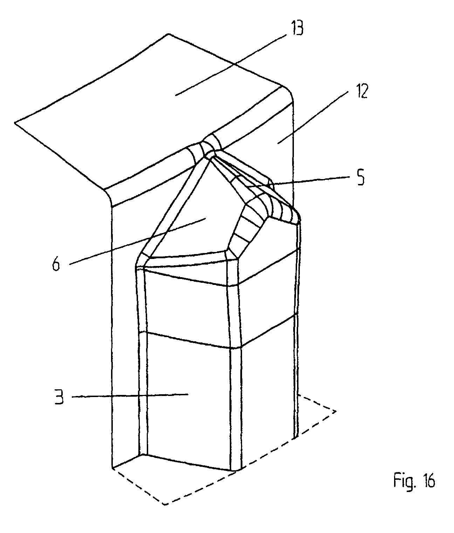

Bei der asymmetrischen Zahnform gemäß den Fig. 12 bis 15 ist das Dach derart extrem auf eine Seite gezogen, daß auf der steilen Seite des Daches die Dachfläche mit der Seitenflanke 3 zusammenfällt, wie man besonders deutlich in Fig. 13 erkennen kann.

In der Zeichnung sind alle Kantenlinien zwischen Dachflächen 6, Seitenflanken 3 und Kopffläche 2 mit doppelten Linien eingezeichnet. Damit soll die Ausbildung kleiner Radien angedeutet werden.

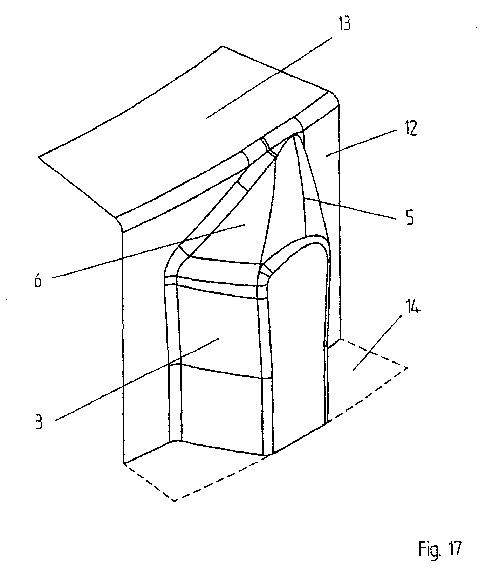

Die Fig. 16 und 17 verdeutlichen jeweils in einem mit einem Linienmuster ergänzten Schaubild einen Abschnitt eines Zahns mit symmetrischer Zahnform (Fig. 16) sowie eines Zahns mit asymmetrischer Zahnform (Fig. 17). Die Zähne sind angesetzt an einem zylindrischen Grundkörper mit der Grundfläche 12 und schließen mit dem höchsten Punkt ihrer Dachfläche jeweils bündig an eine Deckfläche 13 des Grundkörpers an. Man erkennt deutlich die Rundungsradien sowohl im Bereich der Dachkante 5 als auch zwischen den Dachflächen 6 und den Seitenflanken 3.

Es gibt Kuppelverzahnungen, bei denen auch die der Dachfläche gegenüberliegende Grundfläche der Zähne an den Grundkörper angebunden ist, indem dort ein entsprechender in Fig. 17 mit strichlierten Linien angegebener Bund 14 vorgesehen ist.

## Patentansprüche

1. Kuppelverzahnung, insbesondere in einem Schaltgetriebe, entweder an einer Schaltmuffe oder einem Gangrad, deren Zähne fußseitig an einer bezüglich der Rotationsachse zylindrischen Grundfläche (12) angesetzt, in Axialrichtung langgestreckt und an ihrem Kuppelende mit einer vom Zahnfuß (1) zum Zahnkopf (2) hin abfallenden Dachkontur versehen sind, die eine gerundete Dachkante (5) aufweist,
**dadurch gekennzeichnet,**
**daß** der Radius der Dachkantenrundung vom Zahnfuß (1) zum Zahnkopf (2) hin nach einer vorgegebenen Funktion zunimmt.

2. Kuppelverzahnung nach Anspruch 1,
**dadurch gekennzeichnet,**
**daß** die Zunahme nach einer linearen Funktion verläuft.

3. Kuppelverzahnung nach Anspruch 1,
**dadurch gekennzeichnet,**
**daß** die Zunahme progressiv, z. B. nach einer Exponentialfunktion verläuft.

4. Kuppelverzahnung nach Anspruch 1,
**dadurch gekennzeichnet,**
**daß** die seitlich an die Dachkante (5) angrenzenden schrägen Dachflächen (6) Ebenen sind.

5. Kuppelverzahnung nach Anspruch 1,
**dadurch gekennzeichnet,**
**daß** die abfallende Dachkante (5) gradlinig oder progressiv verläuft.

## Claims

1. Clutch gearing, especially in a manual transmission either on shift collar or a gear wheel, where teeth are joined at the side of the base thereof to a cylindrical surface area (12) in relation to the rotational axis, the teeth extending in an axial direction and being provided with top contour which tapers from the dedendum (1) to the addendum (2) and has a rounded top edge (5),
**characterised by** the fact
that the radius of the top rounding increases from the dedendum (1) to the addendum according to a predetermined function.

2. Clutch gearing according to Claim 1,
**characterised by** the fact
that the top rounding increases according to a linear function.

3. Clutch gearing according to Claim 1,
**characterised by** the fact
that the top rounding increases gradually, e.g. according to an exponential function.

4. Clutch gearing according to Claim 1,
**characterised by** the fact
that the sloping faces (6) at the side of and adjacent to the top edge (5) are flats.

5. Clutch gearing according to Claim 1,
**characterised by** the fact
that the slanting top edge (5) extends in a straight line or is gradual.

## Revendications

1. Denture d'accouplement ou de crabot, en particulier pour une boîte de vitesses, prévue soit sur un manchon, soit sur un pignon de rapport, dont les dents côté pied sont rattachées à une surface de base (12) cylindrique par rapport à l'axe de rotation, s'étendent dans la direction axiale et sont pourvues à leur extrémité de couplage d'un contour en forme de toit qui s'abaisse à partir du pied de dent (1) en direction de la tête de dent (2) et comporte une arête (5) arrondie, **caractérisée en ce aue** l'arrondi d'arête de toit augmente depuis le pied de dent (1) en direction de la tête de dent (2) suivant une fonction prédéterminée.

2. Denture d'accouplement ou de crabot selon la revendication 1, **caractérisée en ce que** l'augmentation suit une fonction linéaire.

3. Denture d'accouplement ou de crabot selon la revendication 1, **caractérisée en ce que** l'augmentation est progressive, par exemple suit une fonction exponentielle.

4. Denture d'accouplement ou de crabot selon la revendication 1, **caractérisée en ce que** les surfaces de toit (6) inclinées voisines latéralement de l'arête de toit (5) sont planes.

5. Denture d'accouplement ou de crabot selon la revendication 1, **caractérisée en ce que** l'arête de toit (5) descendante est rectiligne ou progressive.
